# EUROPEAN PATENT APPLICATION

(11) **EP 1 637 216 A2**
(43) Date of publication of application: **22.03.2006**
(21) Application number: 05255429.2
(22) Date of filing: 05.09.2005
(51) Int. Cl.: B01F 3/18, B01F 15/00, B29B 7/28, B29B 7/82

(54) **Power-controlled bonding of resin or (co)polymer powder and flake materials**

(30) Priority: 15.09.2004 US 609975 P; 20.04.2005 US 673140 P
(71) Applicant: Rohm and Haas Company, Philadelphia, PA 19106-2399 (US)
(72) Inventor: O'Neill, Julia C., Glenside Pennsylvania 19038 (US); Sarafinas, Aaron, Ivyland Pennsylvania 18974 (US); Snyder, Scott M., Robesonia Pennsylvania 19551 (US)
(74) Representative: Kent, Venetia Katherine

(57) **Abstract**

The present invention provides methods of making sticky powder comprising mixing one or more resin or (co)polymer powders in one or more mixing devices without agglomerating the powders and while measuring the power, work or torque drawn by the mixing devices, the mixing continuing until the measure of the power or torque drawn indicates that the powders have become sticky. The mixing further comprises adding to the powders one or more dry materials and mixing to so that the dry materials adhere or "bond" to the sticky powders. Alternatively, the methods further comprise slowing or stopping the mixing, or cooling while mixing once the said sticky powders have been formed, adding one or more dry materials to form a sticky powder mixture, and further mixing to bond the sticky powders and the dry materials together. The dry materials may comprise one or more flake materials, e.g. metallic flakes; layered pigments, clays, catalysts or antimicrobials; resins or (co)polymers; cyroprocessed materials, and materials encapsulated or dispersed in brittle materials. The methods may be automated.

## Description

The present invention is directed to methods for making sticky powders and for making powders containing additives or containing two or more powder materials, and, more particularly, to methods for making coating powders containing metallic or mica pigments.

### BACKGROUND OF THE INVENTION

Owing partly to the fact that powder coatings can provide durable coatings with excellent pigment control, ever increasing amounts metal or non-metal flake-containing powder coatings have been sold to provide coatings with a highly reflective, metallic appearance or to provide sparkle finishes. In decorative coatings, striking effects can be achieved through metal-containing coatings. Highly reflective coatings can provide identification and easy recognition of objects. Metal-containing coatings may be used to lower the temperature of vessels, provide solar reflectivity, etc. Likewise, non-metallic flakes, e.g., mica, are desirably incorporated into powder coatings to produce special appearance effects. Nevertheless, metallic flake-containing coating powders are difficult to apply when the metallic flakes and the resin or polymer particles in the coating powders are not adhered or "bonded" together.

Unbonded or inadequately bonded metallic flake or pigment containing coating powders provide coatings having a mottled, inconsistent appearance. Further, in electrostatic coating applications, owing to density and charge control differences between resin powder or resin bonded metallic flake or pigment powder, on the one hand, and unbonded metallic materials, on the other, the unbonded metallic materials segregate from the coating powders over time in reclaimed portions of the powder mix. As a result, much of the reclaimed metallic material containing powders cannot be reused because the concentration of metallic material shifts as the powder mix is reclaimed.

Unfortunately, bonded metallic pigment or flake-containing powder compositions have proven difficult to manufacture consistently on any reasonable scale. Heretofore, metal flakes have been incorporated into coating powders by admixing the metal flakes with the resin, flow-control agents, curing agents, pigments, fillers, etc., prior to melt-compounding of the ingredients. However, during grinding of the melt-compounded composition to produce a coating powder, the flakes are very significantly fragmented, and the finish that results from such a coating powder has a dull, grey appearance. Likewise, coating powders in which aluminum flakes are imbedded into the powder by milling, e.g., in a ball-mill, comprise substantially fragmented flakes and coatings produced thereby fail to achieve the luster of comparable solvent-based metallic paints. Further, Brush polishing a dry mixture of metal flakes and plastic powder so as to embed the flakes into the powder may result in coatings having a high luster. However, the brush polishing method cannot produce coating powder on any industrial scale.

U.S. Patent No. 5,187,220, to Richart et al., provides methods for adhering metallic and non-metallic, e.g. mica, flakes to polymeric coating powder particulates of thermosetting resins, wherein the resin coating powder particulates and flakes are admixed in a medium high-speed blender, having a tip speed of at least 3 m/s, under fluidizing conditions and at temperatures above the softening point of the resin but well below the melting temperature of the resin, for a time sufficient to adhere at least about 75% of the flakes to the thermosetting resin coating powder particulates. Because the flakes are adhered to the resin particles, the composition does not change significantly over time in an application process in which overspray coating powder is reclaimed and reintroduced. However, bonding at a specific powder stickiness depends upon a number of hard-to-control factors, including specific mixing temperatures, mixing times, shear forces, etc., that vary depending upon the composition of the particular thermosetting resin coating powder, particulate and flake size, and specifications, e.g., blade speed, of the mixing apparatus.

In the Richart et al. methods to bond coating powders and metallic flake materials, temperature is controlled relative to softening point; the powder must become warm enough to be sticky or powder and metallic flake will not bond. At the same time, the powder particles must remain cool enough so they don't stick together in one solid mass in the bonding mixer, which would have to be manually removed and disposed of as waste. The softening point for many resins or (co)polymers may, for example, be related to glass transition temperature (T_{g}). However, T_{g} is only a surrogate for the critical resin or (co)polymer powder property, which is the temperature at which the powder becomes sticky, or the "sticky point". Further, both of the T_{g} and softening point of a resin or (co)polymer can change significantly between the time T_{g} is measured and the time resin or (co)polymer is used in the bonding process. T_{g} and softening point can change when the resin or (co)polymer is heated and can change throughout its heat history, and also can change from lot to lot, requiring a new measurement for every bonding run. Still further, if T_{g} or softening point is improperly estimated for any given lot or if the lot is heated too much, the powder and flakes stick together and form a solid mass of waste that must be chipped out of the bonding mixer.

In accordance with the present invention, the inventors have found methods that eliminate the need for repeated and time critical measurement of batch-dependent factors in adhering resin or (co)polymer powder to flake or other dry materials without damaging the materials or ruining the powder. Further, the present inventors have found simple methods to insure effective bonding of flake or other dry materials to resin or (co)polymer on every run without requiring a new or different bonding mixer.

### SUMMARY OF THE INVENTION

According to the present invention, methods of making sticky powder comprise mixing one or more resin or (co)polymer powders in one or more mixing device(s), without agglomerating the powder and while measuring the power or torque drawn by the mixing device, until the measure of power or torque drawn indicates that the powder has become sticky. Further, methods of making sticky powder comprise bonding one or more resin or (co)polymer powders with one or more dry materials by adding to the powder(s) one or more dry materials and mixing so that the dry material(s) adhere to the said sticky powder(s), without agglomerating the powder(s) and while measuring the power drawn by the mixing device. In one embodiment, the dry materials may be added at any time during mixing. As used herein, the phrase "dry material" includes any finely divided or powder material, other than the (co)polymer(s) or resin(s) used to make sticky powder, which does not soften or become sticky under sticky powder forming conditions.

In one embodiment, the methods comprise mixing (i) the powders to form sticky powders or (ii) a mixture of the powders and dry materials to form a sticky powder mixture, followed by slowing or stopping mixing or cooling while mixing the sticky powders or sticky powder mixture once formed, then, in the case of sticky powders (i), adding the dry materials to form a sticky powder mixture, and, further mixing (i) or, if necessary, further mixing (ii) to bond the sticky powders and dry materials together. The methods may comprise measuring and recording power output or torque drawn by the mixing device versus mixing time, and may further comprise recording desired mixing and heating times for bonding specific mixtures. Alternatively, the methods may comprise measuring and recording torque drawn by the mixing device versus mixing time, and may further comprise recording desired mixing and heating times for bonding specific mixtures. The time period for mixing to make sticky powder may range from 30 seconds to 120 minutes. In addition, the methods of the present invention may be fully automated, for batch or continuous processing.

Preferably, the one or more dry materials comprise flake materials, e.g. metallic flake materials. In one embodiment, the methods comprise mixing non-leafing flake materials, such as non-leafing aluminum flake, with sticky powder (i). In another embodiment, the methods comprise mixing (ii) a mixture of the powders and leafing flake materials, such as leafing aluminum flake, or mixtures of leafing and non-leafing flake materials to form bonded sticky powder. Other suitable dry materials may comprise one or more of each of layered pigments, such as interference pigments, layered clays, layered catalysts, antimicrobials, cyroprocessed or freeze-dried materials, powders of resin(s) or (co)polymer(s), and any material encapsulated or dispersed in brittle materials, such as encapsulated liquid catalysts or taste and odor releasing materials encapsulated or dispersed in dehydrated sucrose.

In addition, the present invention provides apparati for bonding one or more powder with one or more dry materials. The apparatus may comprise one or more mixing devices, such as mixers, each comprising one or more mixing chamber having within it one or more mixing element, such as a propeller or impeller, and one or more power measuring device, e.g. power meter or torque meter, connected to the mixer's power feed. One suitable apparatus comprises one or more vertical mixers, each having power meters for measuring the power drawn by the mixing element when mixing. Preferably, the apparatus further comprises the mixing devices connected to one or more automated process controllers, e.g. control loops such as programmable logic controllers (PLC) or neural network feedback loops, to produce consistently bonded metallic or flake powder compositions. Accordingly, the methods may comprise automatically controlling the entire process, or any part thereof, both in the beginning of the process and in-process, including mixing and any adding of material, slowing or stopping mixing cooling, any adding of material, and any further mixing.

### DETAILED DESCRIPTION OF THE INVENTION

The process of the present invention takes advantage of the discovery that the power drawn by the mixing element of any mixer can be used directly to measure the stickiness of resin or (co)polymer powder mixed therein. In addition, the direct measurement of power drawn by any mixing element depends directly on the difficulty of moving the powder in each mixer. For reference, power is measured in Watts and equals voltage (Volts) times current (Amps). For further reference, torque is measured in Joules and equals power/(2π x rotational speed of the impeller). Typically rotational speeds are reported in revolutions per minute.

During mixing and heating with an apparatus comprising a power meter, the power drawn by the mixing element rises, then decreases slightly, e.g. 5%, and then begins to rise a second time as the powder becomes sticky. If the powder is allowed to get too warm and thus begins to form a large solid mass, the power drawn rises exponentially as an indication the temperature is getting too high. Accordingly, the methods to make sticky powder comprise measuring the power drawn by one or more mixing devices while mixing one or more powders, optionally containing one or more dry materials, as the power drawn by the mixer reaches an initial steady value, drops slightly from this initial value and then increases a desired percentage above its initial value, for example, 1% or more, or 2% or more, or 5% or more, and up to 50%, or up to 25%, or up to 10%. The methods further comprise slowing or slowing and stopping the mixing device(s) to stop the heating of the powder or the mixture of powder and dry material, then further mixing to disperse the dry material into the sticky powder and adhere it to the sticky powder, cooling the mix until it is no longer sticky, and then stopping mixing.

Several devices are available to measure power. Power meters, such as from Load Controls Inc of Sturbridge MA, measure power directly, and are accurate over the entire range of power delivered by motors. Torque meters, such as strain gauges on the impeller shaft of a mixer, may also be used to measure the powder stickiness. Care must be taken to match the range of the strain gauge with the expected maximum torque, while maintaining good measurement resolution, for example, to enable accurate reading of the meter. A variety of torque meters are available from Lebow Products, Inc. of Troy Michigan covering a wide range of maximum torques.

According to the present invention, any appearance or property-modifying additive can be attached to a resin or (co) polymer powder. Preferably, the methods of the present invention find use in attaching dry additives onto coating or molding powders.

Dry materials can be added at any time, except that very brittle dry materials, e.g. non-leafing metallic flakes, may preferably be added to sticky powder. However, when none or less than all of the dry material has been added prior to slowing or stopping the mixing devices, the process comprises adding any or all of the dry or flake material after slowing or stopping the mixing device(s), further mixing to adhere sticky powder and dry material, and then stopping mixing.

The present invention eliminates the need for measurement of the glass transition temperature (T_{g}) to make powders sticky and bond them to dry materials, and provides reliable bonding of powder to dry materials. Meanwhile, the coating finishes resulting from metal flake material-containing coating powders and films resulting from metal flake material-containing film-forming powders have luster properties comparable to those of solvent-based, metal flake material-containing paints and film-forming compositions. Accordingly, the inventive methods simplify the powder bonding process while improving control over the powder bonding process, thereby greatly reducing product rejection rates, improving product quality, and minimizing damage to brittle or flake materials.

All ranges cited herein are inclusive and combinable. For example, if an ingredient may be present in amounts of 4 wt% or more, or 10 wt% or more, and may be present in amounts up to 25 wt%, then that ingredient may be present in amounts of 4 to 10 wt%, 4 to 25 wt% or 10 to 25 wt%.

Unless otherwise noted, all processes refer to and all examples were performed under conditions of standard temperature and pressure (STP).

All phrases comprising parenthesis denote either or both of the included parenthetical matter and its absence. For example, the phrase "(co)polymer" includes, in the alternative, polymer, copolymer and mixtures thereof; likewise, the term "mixer(s)" denotes, alternatively, one mixer or two or more mixers.

As used herein, the term "average particle size" refers to the particle diameter or the largest dimension of a particle in a distribution of particles as determined by laser light scattering using a Malvern Mastersizer® 2000 (a product of Malvern Instruments Inc. of Southboro , MA) per manufacturer's recommended procedures.

As used herein, the term "acrylic" includes both acrylic and methacrylic and the term "acylate" includes both acrylate and methacrylate.

As used herein, the phrase "coating powder" refers to a powder coating composition and the phrase "powder coating" refers to a coating formed from a powder coating composition.

As used herein, the term "(co)polymer" means one or more polymer, one or more copolymer, or mixtures thereof.

As used herein, the term "finely divided" refers to any one or more material having an average particle size of 4 mm or less.

As used herein, the glass transition temperature (T_{g}) of any resin or (co)polymer may be calculated as described by Fox in *Bull. Amer. Physics. Soc*., 1, 3, page 123 (1956). The T_{g} can also be measured experimentally using differential scanning calorimetry (rate of heating 20°C. per minute, T_{g} taken at the midpoint of the inflection). Unless otherwise indicated, the stated T_{g} as used herein refers to the calculated T_{g}.

As used herein, unless otherwise indicated, the phrase "per hundred parts" resin or "phr" means the amount, by weight, of an ingredient per hundred parts, by weight, of the total amount of resin, reactant monomer, and polymer contained in a composition, including cross-linking resins and curing agents.

As used herein, the term "pigment" includes pigment, colorant and dye.

As used herein, the term "polymer" includes polymers, copolymers and terpolymers, and block copolymers and terpolymers.

As used herein, the term "sticky powder" refers to powder of one or more resin or (co)polymer, the particles of which, at atmospheric pressure, are sufficiently tacky to adhere to brittle or flake materials or dry additives.

As used herein, the term "wt%" refers to weight %.

Compositions useful in making sticky powder may comprise any one or more (co)polymer or resin in finely divided particulate form, for example, having an average particle size of 500 µm or less, or 200 µm or less or 100 µm or less, or 1 µm or more or 5 µm or more, or more 10 µm or more. Coating and film-forming powders may comprise one or more thermoplastic (co)polymer, or one or more thermosetting (co)polymer or resin, optionally, with one or more cross-linking agent and/or one or more cure catalyst; one or more flow control agent, and such optional components as filler(s), additional pigment(s), and colorant(s). Molding powder compositions may comprise any of the ingredients in the coating powders, however with higher amounts of filler or inorganic pigment(s), e.g. up to 300 phr.

Resins or (co)polymers suitable for making sticky powder according to the present invention may include one or more epoxy resins having a viscosity of from 100 to 3000 centipoise (cP) at 150°C, preferably 200 to 2000 cP, polyester resins, polyurethane resins, epoxy/polyester hybrid resins, acrylic resins, and ultraviolet (UV) curable unsaturated polyesters, e.g. the reaction of fumaric and/or maleic acid with one or more polyols, and unsaturation functional acrylate prepolymers, e.g. linear aliphatic polyester di(meth)acrylates for coatings.

Suitable thermoplastics may include one or more of each of acrylic polymers, polyamides, such as nylon, polyester, such as polyethylene terephthalate (PET), fluoroplastics, such as poly(vinylidene fluoride) (pVdF), blends of acrylic and pVdF, and compatible mixtures thereof. For use in food or medical applications, thermoplastics may comprise aliphatic polyesters, polyamides, polycarbonates, and polylactams, for example, poly(vinylpyrrolidinone) (PVP), and poly(ε-caprolactone) (PCL), poly(trimethylene carbonate), poly(ethylene oxide), alginate polymers, chondroitin sulfate, hydroxyethyl cellulose (HEC), chicle, and other biodegradable polymers, and blends, grafts and copolymers thereof.

Thermosetting resin(s) or (co)polymer(s) used to make sticky powders may further comprise one or more curing or crosslinking agent.Useful resins or (co)polymers for bonding may have T_{g}s of 30°C or more, or 35°C or more, preferably 45°C or more, and up to 100°C, or up to 80 °C, preferably up to 70 °C. Resins or (co)polymers that are thermosetting should have melting temperatures sufficiently low that they can be melt-compounded at temperatures well below that at which they self-cure or react with a cross-linking agent and/or cure catalyst. Further, resins or (co)polymers should have melting temperatures that are sufficiently higher than their T_{g} so that they can be bonded to dry materials without being melted. Accordingly, crystalline resins or polymers, such as linear carboxylic acid functional polyesters or tetramethyl bisphenol epoxy resins, may be included in the one or more polymer or resin in amounts of less than 40 phr, or less than 30 phr, or less than 20 phr.

In processing mixtures of resins or (co)polymers, any one or more resin or (co)polymer having a T_{g} such that it will not soften or become tacky during processing, e.g. a T_{g} 100°C or higher, may be added as dry materials in amounts disclosed below.

The one or more cross-linking agent and/or cure catalyst may suitably comprise any which provide substantial curing at temperatures well above, for example 10°C or more, preferably 20°C or more, the melting point of the resin. Epoxy resins may be cured, for example, by one or more modified and substituted dicyandiamides, modified or substituted imidazoles, polyamines, e.g. hexamethylenediamine, anhydrides, and epoxy resin adducts thereof. Preferably, epoxy curing agents comprise non-crystalline epoxy adducts of epoxy curing agents, e.g. bisphenol A epoxy imidazoles, such as bisphenol A epoxy phenyl imidazole. Hydroxyl functional polyester resins may be cured, for example, with polycarboxylic acids, acid functional polyesters, epoxy resins or blocked multifunctional isocyanates (e.g., a caprolactam blocked isocyanurate of hexamethylene diisocyanate). Acid functional polyester resins may be cured with epoxy resins, triglycidyl isocyanurate (TGIC) or β-hydroxyalkylamides. Epoxy-polyester hybrids cure, by reaction with each other. Hydroxyl functional acrylic resins may be cured, for example, with blocked multifunctional isocyanates, polycarboxylic acids, and acid functional polyesters. UV curable resins may be cured, for example, with one or more crystalline or non-crystalline poly(vinyl ether) crosslinking resins having two or more vinyl ether groups. Preferred poly(vinyl ether) crosslinkers include divinylether urethanes which are the crystalline reaction product of 2 molar equivalents of hexamethylene diisocyanate (HMDI), 1 molar equivalent of diol or glycol such as neopentyl glycol, and 2 molar equivalents of hydroxyalkyl vinyl ether, or those which are the non-crystalline reaction product of 2 molar equivalents of isophorone diisocyanate (IPDI), 1 molar equivalent of diol or glycol such as neopentyl glycol, and 2 molar equivalents of hydroxyalkyl vinyl ether.

The amount of the one or more curing agent used may be that sufficient to effect curing, such as 2 phr or more, or 5 phr or more, and up to 50 phr, or up to 40 phr, or up to 20 phr, depending upon the particular chemistry and stoichiometry involved. In general, the one or more polymer or resin may be mixed with one or more curing agent such that the total stoichiometric ratio of one or more curing agent to each polymer or resin ranges from 0.66:1.0 to 1.5:1.0. In thermoplastic coating powders, in self-curing resin or (co)polymer coating powders and in catalyzed resin or (co)polymer coating powders, curing agents may not be present at all.

The total amount of the one or more resin or (co)polymer may range up to 99.99 wt%, based on the total weight of the coating powder composition, or up to 99 wt %, or up to 70 wt%, or up to 50 wt%, and should be present in film-forming amounts of 30 wt% or more, based on the total weight of the coating powder composition, or 40 wt% or more, 60 wt% or more, or 80 wt% or more, or 90 wt% or more, or 96 wt% or more.

Coating powder compositions may contain flow control additives, including but not limited to, low molecular weight polyacrylates, and silicones. Flow control additives may be added in amounts of 0.1 phr or more, or 0.5 phr or more or 1.0 phr or more, up to 4 phr, or up to 2.5 phr, or up to 1.5 phr.

Other ingredients may be added to a melt mix for making powders, e.g. molding or coating powders. One or more of each of fillers, such as china clay, barytes, additional pigments, or one or more colorants other than flakes, e.g. titanium dioxide, carbon black, organic phthalocyanines and pigments, hollow sphere pigments or opaque polymers, if used, may be used in amounts of from 10 to 120 phr. Large size fillers, e.g. those having an average particle size of over 25 µm, such as diatomaceous earth, wollastonite or calcium carbonate, can be added to create a matte finish coating or capstock. Further, to create a matte finish, waxes, PTFE, organophilic clays, and acid-functional acrylate (co)polymers may be added in the amount of from 1 phr or more, or 2 phr or more, and up to 50 phr, or up to 20 phr, or up to 10 phr. Melt flow aids, such as alkyl (meth)acrylate copolymers, and mold-release agents may be added in amounts of 0.1 phr or more, or 1 phr or more, and up to 10 phr, or up to 5 phr, or up to 2 phr. Still further, leveling agents, e.g. benzoin and alkyl ethers and esters of benzoin, and light stabilizers, e.g. hindered amines and hindered phenols, may be added in the amount of from 0.3 to 4 phr. In addition, anticorrosives such as zinc phosphate and other metal phosphates may be added in amounts ranging from 0.3 phr or more, or 2.0 phr or more, or 5 phr or more, to as much as 40 phr, or as much as 20 phr, or as much as 15 phr. Antioxidants, such as benzotriazole, may be added in the amount of from 0.1 to 1 phr.

Dry flow aids, such as fumed silica and alumina, and fumed silica treated with alkoxysilanes, may be added to coating powders in amounts of from 0.1 phr or more, or 0.5 phr or more, and up to 1.5 phr, or up to 1.0 phr. Dry flow aids should be post-blended into the product powder by simple mixing. To make coating powders, the one or more dry flow additive(s) may be added at very end of the mixing and cooling cycle of the bonding process.

The resin or polymer powders to be made into sticky powder, and bonded with one or more dry materials may be produced by blending the resin, curing agents, catalysts, fillers, and all additives other than the dry materials and other than any dry flow aids, and then melt-compounding or extruding with heating above the melting point of the resin for a short time, e.g., 30 to 120 sec., so that no significant curing occurs. The molten compound is extruded, and after extrusion, the composition is rapidly cooled. The composition is then ground and the particulates sorted according to size to make a powder suitable for bonding. Alternatively, resin or (co)polymer powders, especially in the case of thermoplastics, may be formed by spray drying an optionally heated aqueous dispersion or suspension of the resin or (co)polymer containing the additives desired, except for the brittle or flake additive. If the thermoplastic is sufficiently hard, the aqueous mixture containing it may simply be cooled, dewatered and ground to make powder. Otherwise, resin or (co)polymer powders may be processed in supercritical fluid, e.g. in an extruder, followed by spray drying to form powder.

Dry materials may suitably comprise one or more of each of flake pigments, such as metallic flake pigments, micas, metal oxide coated micas, e.g. cobalt oxide coated mica, and interference pigments; layered silicates, such as smectites, and phyllosilicates; catalysts, such as any which are inactive under sticky powder forming conditions; brittle freeze-dried materials, such as natural flavors; materials encapsulated or dispersed in brittle materials, such as encapsulated liquid catalysts; and flavorants, odor releasing materials, medicaments or pharmaceuticals encapsulated or dispersed in brittle frangible materials, such as dehydrated sucrose, and resins or (co)polymers that do not soften in processing. Brittle materials preferably are mixed with sticky powder after it has been made.

Suitable metallic flakes may comprise aluminum flakes, also called aluminum bronze, and may either be of the very thin "leafing" variety or thicker non-leafing variety which should be protected against leafing. Other metals that may also be used include nickel, bronze, zinc, stainless steel, copper, brass, alloys and mixtures thereof. Suitable non-metallic flakes may include micas, especially metal oxide coated micas and interference pigments, for example, CHROMAFLAIR^{TM} light interference pigments, from Flex Products, Inc., Santa Rosa, CA. Preferred dry materials are metallic flakes, more preferably, leafing or non-leafing aluminum.

Other dry materials may comprise one or more resin(s) or copolymer(s) which remain non-tacky when processed with any one or more sticky powder(s). For example, powder coatings for forming low gloss finishes may comprise a bonded mixture of an unsaturated polyester which was made into sticky powder and bonded to a dry material of an aromatic epoxy resin having an epoxy equivalent weight of 700 or more or a glycidyl (meth)acrylate copolymer.

Unless otherwise stated, proportions of dry materials, e.g. mica pigments, may range up to 120 phr, or up to 60 phr, or up to 20 phr and may be used in amounts of 0.05 phr or more, or 0.2 phr or more. The amount of the one or more metallic flake materials should range up to 20 phr or less, or 13.33 phr or less to limit the explosivity hazard of coating powders containing such materials, while such flake materials may be used in amounts of 0.05 phr or more, or 0.2 phr or more, or 1 phr or more. The amount of any of the one or more antimicrobial catalyst dry materials or any brittle dry materials other than metallic flakes should range up to 25 phr, or up to 10 phr, or up to 5 phr, and may be as low as 0.001 phr or more, or 0.001 phr or more, or 0.1 phr or more or 0.5 phr or more, or 1 phr or more.

Brittle dry materials and flake dry materials may fragment somewhat during their fusion to the coating powder particulates. However, detrimental effects on the final finish are minimized by optimal control of the bonding process. For example, the luster of finishes with non-leafing aluminum, used primarily for a sparkle effect, diminishes only slightly due to fragmentation of the aluminum flakes. The luster of a finish with leafing aluminum, which may be used for forming a mirror-like finish, may enhanced in some cases by some fragmentation of the flakes during the process in which the flakes are bonded to the resin or (co)polymer containing powders.

The methods of the present invention may comprise mixing in any mixing device that causes friction among powder particles, causing them to heat to form sticky powder, while measuring the power or torque drawn by the moving parts of the mixing device, i.e. mixing elements. With less brittle dry materials, e.g. layered silicates and leafing aluminum flake, one or more materials may be added at any time during mixing. With more brittle materials, e.g. additives encapsulated or dispersed in brittle materials, brittle freeze-dried materials, and non-leafing aluminum flake, the one or more brittle dry materials are added to sticky powder after mixing to heat the powder has been slowed and stopped or slowed sufficiently to prevent further powder heating. In any case, mixing may be slowed or slowed and stopped once sticky powder has been formed, and then continued or re-started, preferably at a slower pace, to disperse powder and dry material and bind them together without further heating the sticky powder. In practice, further slow mixing should be continued until the mixture has reached a temperature of 55°C or below, preferably 45°C or below, more preferably 30°C or below, or until the mixture has reached any temperature that is at least 10°C, preferably 20°C below the calculated T_{g} for the resin or (co)polymer having the lowest calculated T_{g} present in the mixture.

The process of the present invention, particularly when metal flake materials are used, should be performed under an inert atmosphere, e.g., under nitrogen, to minimize the risk of explosion.

In coating powder compositions, once the powder has cooled, one or more dry flow aids may be mixed in with continued mixing which is slow enough to prevent further heating of the powder.

If particle sizes of product powder compositions need be reduced for use, such powder compositions may be dry ground, such as in an air classifying mill or jet mill, to a desired average particle size. Average particle sizes for the coating powders may range from 10 µm or more, preferably 15 µm or more, and up to 150 µm, or up to 70 µm, or up to 40 µm, preferably up to 25 µm. Larger average size coating powders may be useful for fluidized bed coating operations.

Suitable types of mixing device(s) may include any that are capable of providing the shear necessary to bond the flakes to the softened coating powder particles and at the same time prevent agglomeration of the coating powder particulates. Such suitable mixing device(s) may include any shape or type of mixer having one or more rotating mixing elements which will have sufficient power to disperse a solid material into a sticky powder, e.g. blade(s). Suitable mixing device(s) include any having one or more mixing elements with a tip speed of 1 m/s or more. The mixing element(s) may comprise impellers, mixing blades, propellers or combinations thereof. For example, any mixer having an impeller to move the powder during heating will suit the methods of the present invention. In one embodiment, mixing device(s) may comprise one or more mixing chamber of any shape having disposed within it one or more mixing element(s) to provide the shear. Horizontal mixing chambers may be suitable, however vertical mixing chambers, e.g. cone or drum mixing chambers may ease or replace any heating by creating friction buildup among the particles or particles and flakes. Examples of suitable mixing devices include one or more, preferably two or three, blades of paddles are mounted in a vertical cylinder or conical chamber to rotate about the axis of the cylinder and to scrape the inner surface of the chamber so that all the powder being mixed is continuously moved around and along the cylinder. The blades can be in the shape of ploughshares to improve mixing of the powder along the length of the cylinder.

Preferably, the mixing device(s) comprise vertical cone, cylindrical or drum mixers having one or more impellers or perforated blade mixing elements. More preferably, the mixing element path remains at all times within a short distance of the inner wall of the mixing chamber to scrape or sweep the floor or lower surface of the mixing chamber as they pass. Suitable gaps separating mixing element paths from inner mixing chamber surfaces may range as much as 2 cm or less, or 1.5 cm or less, or 10 mm or less, or 7 mm or less, or 5 mm or less. Such suitable gaps may be wider in larger mixing devices.

Exemplary vertical mixers are available from Plasmec Lonate Pozzolo, Italy, and include liquid cooled mixing blades; other mixers may include those available from Mixaco (Neuenrade, Germany), Hosokawa Cyclomix (Osaka, Japan), Littleford (Florence, Kentucky, USA) and those carrying the name Henschel.

The necessary thermal energy for bonding the coating powder particles and the dry material particles may be provided entirely by the heat of friction caused by mixing shear; however, it is preferred that the mixing apparatus be jacketed to provide for external heating and/or cooling to maintain a suitable bonding temperature. Preferably, external heating and/or cooling jackets, heated or cooled impellers or blades may be provided. Alternatively, heated mixing devices may be equipped with one or more inlets for forced hot air circulation, heating elements or induction coils located in the any one or more of the mixing element or in the wall or base of the mixing the chamber, or via introduction of any of hot air, with or without circulation. Cooling may be effected by introducing cold air into a mixer, e.g. one or more inlets for forced air circulation. Suitable inlet(s) may be for low to medium velocity gas streams, such as cool air or hot air, to ensure that the powder is kept circulating past the blades. Cooling may also be effected via one or more cooled mixing elements, e.g. filled with cooling fluid.

To measure the power or torque drawn by mixing device(s) in-process, power or watt or torque meters are connected electronically, and, optionally, also physically, to the mixing device(s). Suitable meters may indicate the power, wattage or torque drawn. So long as the meter is properly calibrated and has an appropriate resolution to measure power, watts, work or torque, it matters not what units or ratios of power, watts, work or torque the meter indicates. Preferably, mixing devices are equipped with power meters, watt meters or torque meters having an automated control system, such as process controllers comprising automatic control loops, electronic control devices, or feedback logic devices which enable the meter to shut off the process at a desired level of power, wattage or torque. For example, depending on the power meter output, the automated control system changes mixer speeds, and opens and closes valves for introducing any ingredient, or any fluids or gases into the mixing device. Suitable power meters with integrated process control capability may include watt meters available from Load Controls Inc., Sturbridge, MA.

To create automated methods for continuous or batch processing, the present invention provides bonding apparati having automated control systems which enable in-process adjustments to control as well as reproduction of the bonding methods, as desired. For example, the mixing and power measuring devices may be attached to process controllers. Each process controller may comprise one or more automated handling devices for handling each desired raw material that may be used. Suitable automated raw material handling devices include pneumatically or electronically controlled delivery, weighing and metering means, such as metered air fluidized valves or metered powder feed or air fluidized hoppers and all conduits carrying raw materials from storage through the end of bonding. Any process controller preferably comprises one or more logic device to control the bonding process, such as one or more programmable logic controller (PLC), including single loop feedback controllers and multiple loop feedback controllers, or several PLCs as part of a distributed control system (DCS). Alternatively, one or more electronic switching device connected to the bonding apparatus can enable a single operator to manually monitor and control the bonding process, e,g, by reading the appropriate power or torque meter(s) and switching off or slowing down the corresponding bonding mixing device(s).

Suitable logic devices controlling the bonding apparatus and all of its devices and parts thereof may suitably comprise one or more software programs loaded on computer(s) or other data processing device(s) connected to the apparatus and/or circuitry connected to the apparatus. Preferably, the logic devices connected to the bonding apparatus comprise one or more automated control loops. The automated methods of the invention may thus be carried out in apparati which can adjust process parameters, such as raw material input amounts, in-process and when needed to insure that the desired product is produced. More preferably, the logic devices loaded on or connected to one or more data processing devices, such as one or more computers, can enable remote electronic control of bonding methods, e.g. via circuitry leading to the computers or data processing devices or wirelessly.

All information used in the methods of the present invention may be stored and managed on data processing devices. Any suitable data processing device comprising memory and storage means having sufficient capacity to store information on and to manage methods to making many thousands of powder compositions may be used. The data processing devices and the logic devices may be used to manage any or all process controls, such as switches and controls used to run each mixer, meter, other device or any part thereof used in the bonding process.

In operation, suitable automated control systems may record, catalogue, and manage, among other things, proportions of the raw materials required to make any powder, e.g. coating powder, compositions; the details of the average particle sizes of the each of the ingredients and the bonded products for each composition; and the mixer speeds, mixer types, processing time for mixing to make sticky powder, processing temperature, pressure and relative humidity, and power draws required or historically used to or make sticky powder for specific mixtures and mixing conditions. Accordingly, for given powder products, the process controller can select ingredients, calculate the weight of each ingredient to be used and set any process parameters, and then manage the process automatically, via electronic controls of each mixer or meter, and any part thereof, and in-process through each feedback control loop.

For any batch process, the control systems can automate the bonding method only or may automate powder formation and bonding methods, such as for small batch runs. In continuous processes, the control systems may automate both powder formation and bonding methods for extended periods. In typical powder formation systems, raw material supply and supply controls lead into one or more extruders, each of which lead onto cooling devices, such as water cooled chilling rolls, and then grinders, wherein the grinders then lead into the mixing devices for bonding.

The powder compositions of the present invention can be used to form coatings, films, film laminates, and shaped articles. Such compositions may suitably be used, either on powder or slurry form, as compositions for powder coating, molding in color, finishing in color, e.g. capstock, and in-mold coatings; as adhesives for construction, packaging, labels and tapes, and medical use; as shapeable or film-forming compositions for food, drug and cosmetic products, such as chewing gums, breath mints, dentifrices, denture adhesives, transdermal patches, drug delivery devices, dosage forms or excipients, surgical implants and sutures.

Coatings and film-forming compositions may be applied to metal substrates, e.g. to steel, brass, copper, iron, and aluminum, masonry substrates, such as concrete, asphalt-containing substrates, such as pavement, as well as to heat sensitive wood, plywood, fiberboard, e.g. medium density fiberboard (MDF), paper, cardboard and plastic substrates. Coatings may be used for various industrial products, such as steel coils, metal pipes and hardware, e.g. door and window hardware, structural components, machine parts, or panels, e.g. signs; may be used in exterior weatherable applications, such as for architectural and building materials substrates, e.g. paneling, or for traffic paints; and may be used in decorative applications, such as for furniture, bathroom and kitchen fixtures and cabinetry, or appliances.

In one example, for making sparkle-effect in coatings or molding capstocks or molded-in finishes, the methods comprise mixing resin or (co)polymer powder and non-leafing aluminum flake together to make a sticky powder mixture while mixing to disperse them together, such that the power drawn by the mixing device increases 5% from the initial steady state power drawn by the mixer. In another example, the methods comprise mixing resin or (co)polymer powder to make sticky powder while monitoring power draw for the 5% increase from initial steady state power draw, stopping or slowing mixing, adding leafing aluminum flake and cooling down by slow agitation in one or more mixer with a water cooling jacket.

### EXAMPLES 1 and 2

The following examples represent a likely use of the present invention and were not actually performed.

### Example 1

Four pounds of an acid-functional polyester coating powder containing 10 phr (parts per hundred resin) of a β-hydroxyalkyl amide curing agent is placed into a 5-liter Plasmec turbomixer for plastics, model TRM-5. The mixer blade is rotated at 1600 rotations per minute (rpm). The power drawn by the mixer is displayed and output to a programmable logic controller (PLC). The power rises initially to 6.5 watts, +/- 0.2 watts. As the powder approaches its T_{g}, the power dips to approximately 6.0 watts for 30 seconds and then the power begins to rise steadily above 6.5 watts. If the mixer were allowed to continue turning, the powder would congeal into a large mass, and the watts would increase above the capacity of the mixer, forcing the mixer to stop. Instead, the PLC intervenes when the power reaches 7.2 watts (10% above the initial steady-state power draw). When the power reaches 7.2 watts, the mixer blade is slowed to 1000 rpm, and 0.16 pounds of Aluminum flake pigment are added to the mixer. The mixer continues at 1000 rpm for 2 minutes. At the end of this cycle, the powder and Aluminum flake are bonded together.

### Example 2

Four pounds of an epoxy coating powder containing 10 phr of a bisphenol A epoxy phenyl imidazole curing agent is placed into a 5-liter Plasmec turbomixer for plastics, model TRM-5. The mixer blade is rotated at 1600 rotations per minute (rpm). The power drawn by the mixer is displayed and output to a PLC. The power rises initially to 8 watts, +/- 0.2 watts. As the powder approaches its T_{g}, the power dips to approximately 7.6 watts for 30 seconds and then the power begins to rise steadily above 8 watts. If the mixer were allowed to continue turning, the powder would congeal into a large mass, and the watts would increase above the capacity of the mixer, forcing the mixer to stop. Instead, the PLC intervenes when the power reaches 8.8 watts (10% above the initial steady-state power draw). When the power reaches 8.8 watts, the mixer blade is slowed to 1000 rpm, and 0.16 pounds of Aluminum flake pigment are added to the mixer. The mixer continues at 1000 rpm for 2 minutes. At the end of this cycle, the powder and Aluminum flake are bonded together.

## Claims

1. A method of making sticky powder comprising
mixing one or more resin or (co)polymer powders in one or more mixing devices without agglomerating the said powders and while measuring the power or torque drawn by the said mixing devices, said mixing continuing until the measure of the said power or torque drawn indicates that the said powders have become sticky.

2. A method as claimed in claim 1, wherein said mixing further comprises adding to the said powders one or more dry materials and mixing to form a sticky powder mixture so that the said dry materials adhere to the said sticky powders.

3. A method as claimed in claim 1, further comprising
slowing or stopping the said mixing or cooling while mixing the said sticky powders once the said sticky powders have been formed,
adding one or more dry materials to form a sticky powder mixture, and,
further mixing to bond the said sticky powders and the said dry materials together.

4. A method as claimed in claim 3, wherein the said one or more dry materials comprise one or more (co)polymers or resins.

5. A method as claimed in claim 2, wherein the said one or more dry materials comprise one or more of each of flake materials, layered pigments, layered clays, catalysts, antimicrobials, cyroprocessed materials, freeze-dried materials, and any material encapsulated or dispersed in brittle materials.

6. A method as claimed in claim 3, wherein the said one or more dry materials comprise one or more of each of flake materials, layered pigments, layered clays, catalysts, antimicrobials, cyroprocessed materials, freeze-dried materials, and any material encapsulated or dispersed in brittle materials.

7. A method as claimed in any one of claims 5 or 6, wherein the said one or more dry materials comprise one or more leafing metallic flake materials, one or more non-leafing metallic flake materials or mixtures thereof.

8. A method as claimed in claim 7, wherein the said one or more metallic flake materials comprise non-leafing aluminum flake, leafing aluminum flake materials, or mixtures thereof.

9. A method as claimed in any one of claims 1 to 6, wherein the method is fully automated for batch or for continuous processing.

10. A method as claimed in claim 9, wherein the method is fully automated for controlling the said method in-process.
